# EUROPEAN PATENT SPECIFICATION

(11) **EP 2 568 763 B1**
(45) Date of publication and mention of the grant of the patent: **20.07.2016**
(21) Application number: 11180483.7
(22) Date of filing: 07.09.2011
(51) Int. Cl.: H04W 84/18, H04M 1/725

(54) **Full-duplex wireless voice broadcasting system with channel-changing and interference-resistance**
Drahtlose Vollduplex-Sprachrundfunksystem mit Kanalwechsel und Interferenzbeständigkeit
Système de diffusion vocale sans fil totalement en duplex avec changement de canal et résistance aux interférences

(43) Date of publication of application: 13.03.2013
(73) Proprietor: National Chung-Shan Institute of Science and Technology, Taoyuan County 325 (TW)
(72) Inventor: Lee, Ming-Town, 325 Taoyuan County (TW); Liao, Jen-Chi, 325 Taoyuan County (TW); Hsu, Tung-Jung, 325 Taoyuan County (TW); Suen, Tain-Wen, 325 Taoyuan County (TW)
(74) Representative: Lang, Christian

(56) References cited:
- EP-A1- 1 261 176
- EP-A2- 1 519 522
- WO-A1-2010/000293
- CN-A- 101 500 323
- CN-A- 101 697 635
- US-A- 5 991 624
- US-A1- 2005 153 666
- US-A1- 2008 080 703
- US-A1- 2008 242 229
- LEE YONG HUA ET AL: "Delivering high quality, secure speech communication through low data rate 802.15.4 WPAN", TELECOMMUNICATIONS AND MALAYSIA INTERNATIONAL CONFERENCE ON COMMUNICATIONS, 2007. ICT-MICC 2007. IEEE INTERNATIONAL CONFERENCE ON, IEEE, PISCATAWAY, NJ, USA, 14 May 2007 (2007-05-14), pages 758-763, XP031228694, ISBN: 978-1-4244-1093-4

## Description

### Technical Field of the Disclosure

The present disclosure relates to a wireless voice system more particularly, relates to achieving full-duplex (two-way) voice communication by using at least one receiving device with good mobility to be used as an emergency caller to an emitting device and relates to having advantages in interference resistance, energy saving, short-distance emergency calling, and calling for help.

### Description of the Related Arts

In the market, most microphones, amplifiers and speakers are one-way devices and require wires. Even the wireless microphones (or speakers) may be interfered by noise. Microphones used may be replaced quite often. Places for positioning the microphones may be ever changing. These may cause inconveniences. Not to mention the batteries of the microphones may need to be replaced once in a while. This may also increase the financial burden. Hence, the prior arts do not fulfill all users' requests on actual use.

Voice broadcasting is already known for example from EP 1 261 176 A1 , EP 1 519 522 A2, CN 101 500 323 A and the article "Delivering high quality, secure speech communicating through low data rate 802.15.4 WPAM" by Lee Yong Hua et al.(Telecommunications and Malaysia international conference on communications, 2007. ICT-MICC 2007. IEEE International conference on, IEEE, Piscataway, NJ, USA, 14 May 2007, pages 758-763, XP031228694, ISBN: 978-1-4244-1093-4). However, the state of the art has the disadvantage that there is either no registration and check-in process or such processes are difficult to perform. Thus, starting from the prior art it is the object of the present application to provide an apparatus for voice broadcasting which simplifies the registration and check-in process.

### Summary of the disclosure

The above mentioned object is solved by the full-duplex wireless voice broadcasting system according to claim 1 and the method according to claims 8 and 9. Advantageous improvements of the system are described by dependent claims.

The main purpose of the present disclosure is to achieve full-duplex (two-way) voice communication by using at least one receiving device with good mobility to be used as an emergency caller to an emitting device; and is to have advantages in interference resistance, energy saving, short-distance emergency calling and calling for help.

To achieve the above purpose, the present disclosure is a full-duplex wireless voice broadcasting system with channel-changing and interference-resistance, comprising an emitting device and at least one receiving device, where the emitting device comprises a first voice sampling/reconstructing unit; a first local network unit connected with the first voice sampling/reconstructing unit; and an first operation unit connected with the first local network unit; the emitting device periodically emits data packages and the data packages contain data selected from a group consisting of voice data and non-voice data; the receiving device comprises a second voice sampling / reconstructing unit; a second local network unit connected with the second voice sampling/reconstructing unit; and a second operation unit connected with the second local network unit; after being connected with the emitting device, the receiving device receives the data packages and a standby status is maintained between the emitting device and the receiving device; the emitting device performs a method comprising steps of (a) booting and resetting the emitting device; (b) staying in an idle status; (c) checking whether an uploaded package is received; (d) if the uploaded package is not received, processing steps of (d1) reading data in the first flash memory; (d2) setting a quality feedback code; (d3) packaging data; and (d4) transferring a downloaded package and then going to step (b); (e) if the uploaded package is received, unpacking the uploaded package; (f) through a voice data receiving buffer, processing voice reconstruction; (g) checking whether a connection exists; (h) if the connection exists, checking whether an alarm parameter exists; (i) if the connection does not exist, setting a wireless channel parameter and then checking whether the alarm parameter exists; (j) if the alarm parameter exists, starting a light and a voice alarm and checking whether a registration parameter and a check-in parameter exist; (k) if the alarm parameter does not exist, directly checking whether the registration parameter and the check-in parameter exist; (I) if the registration parameter and the check-in parameter do not exist, reading parameters of the emitting device and then going to step (d1); (m) if the registration parameter and the check-in parameter exist, setting the registration parameter; (n) writing buffer data into the first flash memory; (o) reading parameters of the emitting device and then going to step (d1); and (p) on voice-sampling, processing steps of (p1) directly taking a voice sample; (p2) transferring the voice sample to a data register; (p3) checking whether a transferring buffer is full; (p4) if the transferring buffer is full, reading the parameters of the emitting device and then going to step (d1); and (p5) if the transferring buffer is not full, going to step (p1); and the receiving device performs a method comprising steps of (a) booting and resetting the receiving device; (b) checking whether a registration is required; (c) if the registration is not required, processing steps of (c1) pushing a registration key; and (c2) checking whether the registration key is pushed more than one second; (d) if the registration key is not pushed more than one second, pushing the registration key more than one second again; (e) if the registration key is pushed more than one second, checking whether a downloaded package is received; (f) if the downloaded package is received, processing steps of (f1) transferring a registration package; and (f2) checking whether the registration is successful; (g) if the registration is not successful, going to step (c1); (h) if the registration is successful, processing steps of (h1) staying in an idle status; and (h2) checking whether an alarm is required; (i) if the alarm is required, starting the alarm and checking whether a transferring buffer is full; (j) if the alarm is not required, directly checking whether the transferring buffer is full; (k) if the transferring buffer is full, processing steps of (k1) reading parameters of the receiving device; (k2) packaging data; and (k3) transferring an uploaded package; (I) if the transferring buffer is not full, checking whether a downloaded package is received; (m) if the downloaded package is not received, going to step (h1); (n) if the downloaded package is received, checking whether a frequency channel needs to be changed; (o) if the frequency channel needs to be changed, processing steps of (o1) changing the frequency channel to a new frequency channel; (o2) processing voice reconstruction through a voice data receiving buffer; and (o3) staying in an idle status; (p) if the frequency channel does not need to be changed, processing step (o2) and step (o3); (q) if the downloaded package is not received in step (e), checking whether a channel table needs to be replaced; (r) if the channel table does not need to be replaced, changing frequency channel and then going to step (e); (s) if the channel table needs to be replaced, going to step (c1); (t) if a registration is required in step (b), checking whether a downloaded package is received; (u) if the downloaded package is received, unpacking package and processing step (o2) and step (o3); (v) if the downloaded package is not received, processing steps of (v1) pushing a function key for check-in; and (v2) checking whether a button is pushed; (w) if a button is not pushed, pushing a button again; (x) if a button is pushed, uploading a check-in package; (y) checking whether a downloaded package is received; (z) if the downloaded package is received, unpacking package and processing step (o2) and step (o3); (aa) if the downloaded package is not received, going to step (c1); and (ab) on voice-sampling, processing steps of (ab1) taking a voice sample; and (ab2) transferring data of the voice sample to a data register and processing step (k2) and step (k3). Accordingly, a novel full-duplex wireless voice broadcasting system with channel-changing and interference-resistance is obtained.

### Brief descriptions of the drawings

The present disclosure will be better understood from the following detailed description of the preferred embodiment according to the present disclosure, taken in conjunction with the accompanying drawings, in which
- FIG.1: is the perspective view showing the preferred embodiment according to the present disclosure;
- FIG.2: is the view showing the structure of the present disclosure;
- FIG.3: is the block view showing the present disclosure;
- FIG.4: is the view showing the operation unit;
- FIG.5: is the view showing the method for operating the emitting device;
- FIG.6: is the view showing the method for operating the receiving device;
- FIG.7: is the view showing the time sequence;
- FIG.8: is the view showing the voice package;
- FIG.9: is the view showing the channel-changing; and
- FIG.10: is the view showing the transferring of the voice signals.

### Description of the preferred embodiment(s)

The following description of the preferred embodiment is provided to understand the features and the structures of the present disclosure.

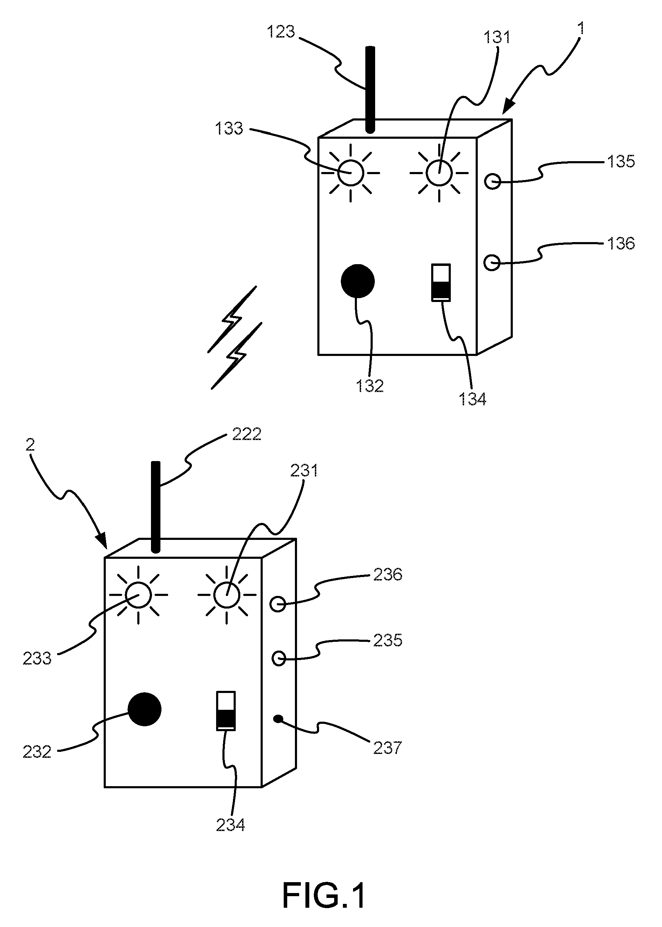

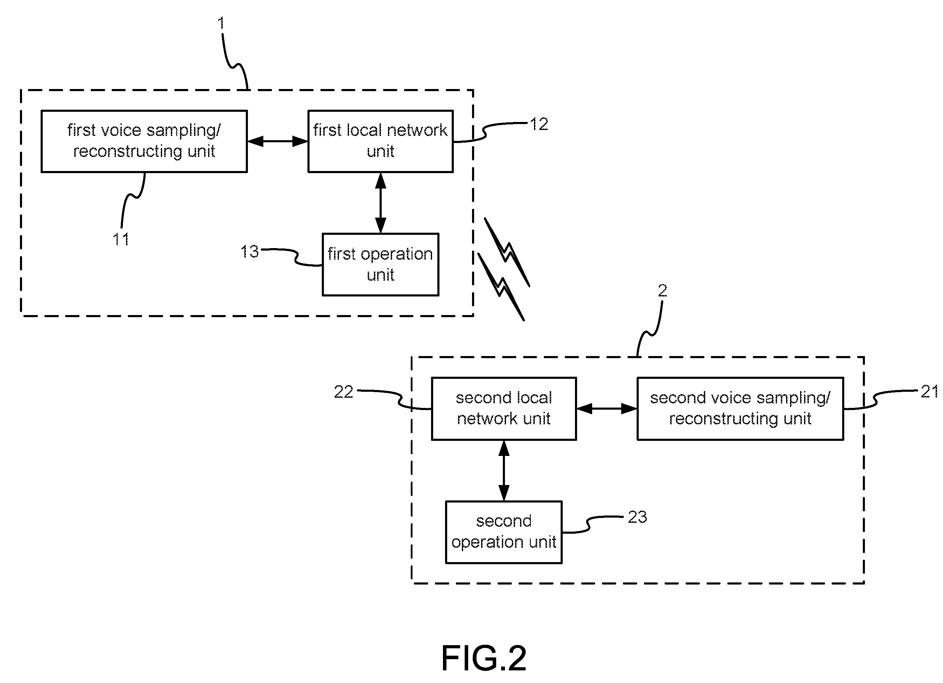

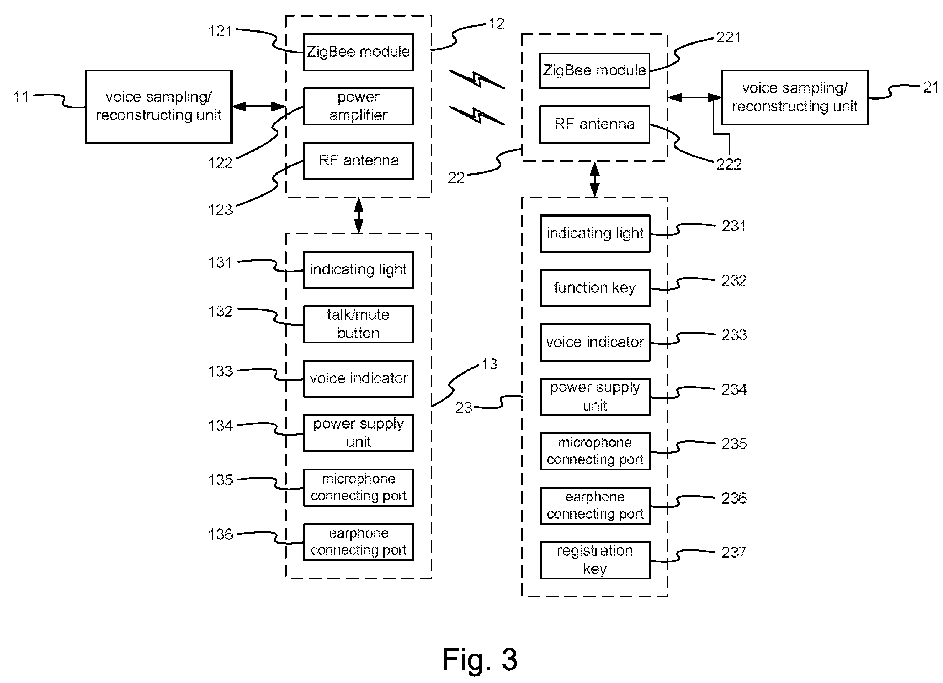

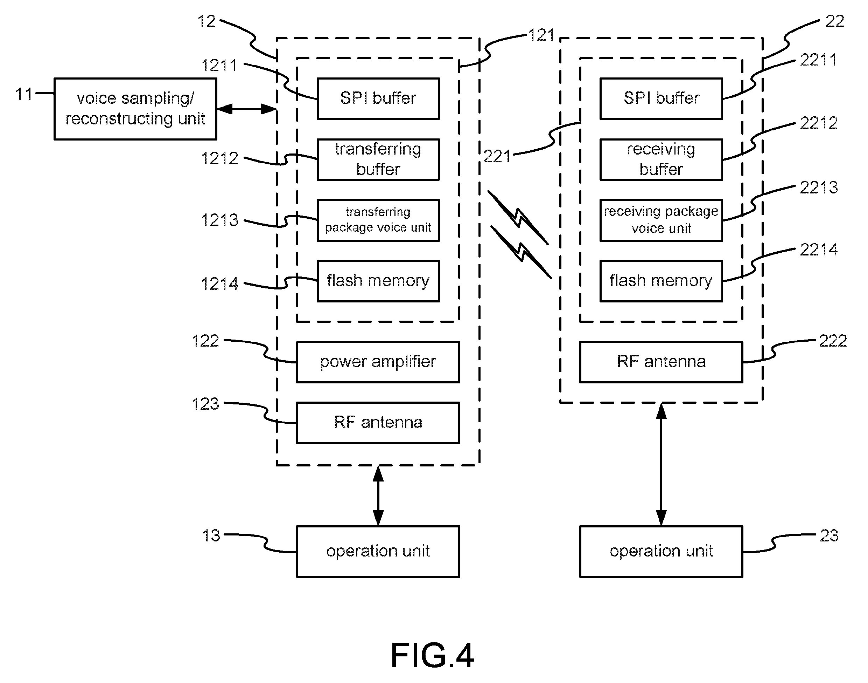

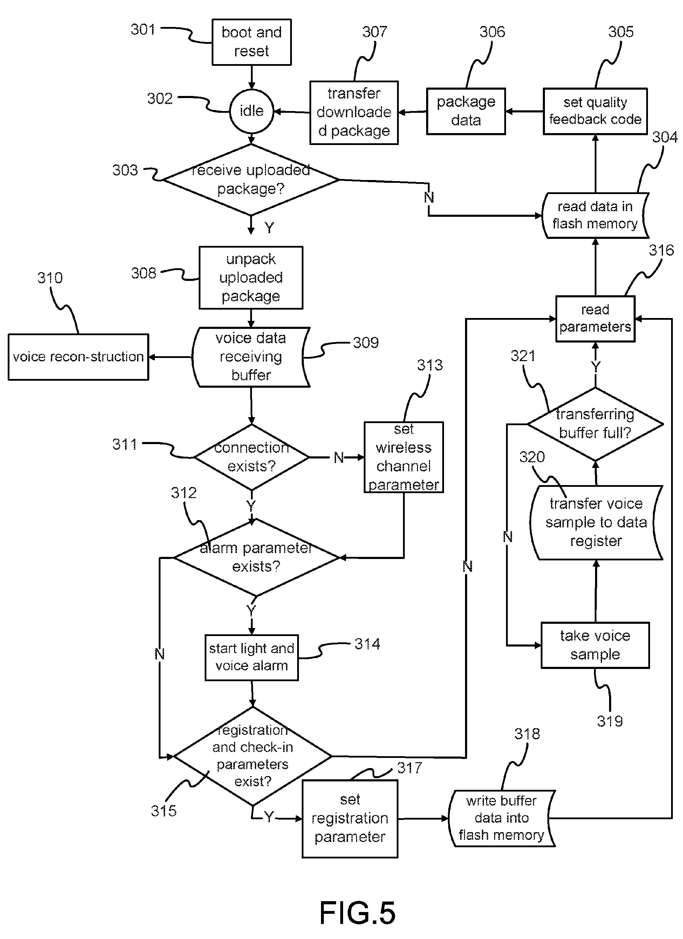

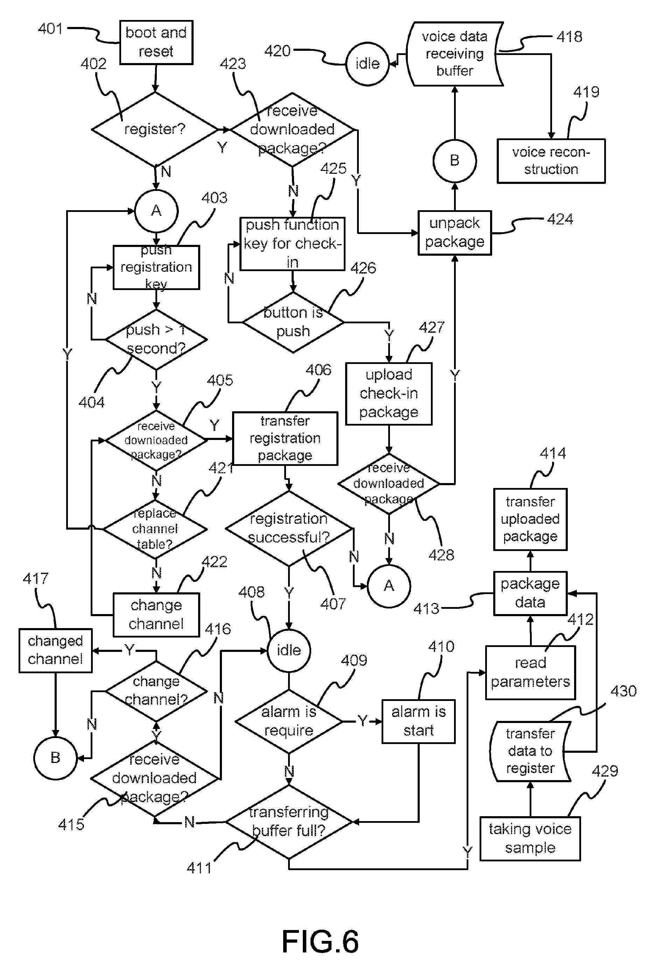

Please refer to FIG.1 to FIG.10, which are a perspective view showing a preferred embodiment according to the present disclosure; a view showing a structure of the present disclosure; a block view showing the present disclosure; a view showing an operation unit; a view showing a method for operating an emitting device; a view showing a method for operating a receiving device; a view showing a time sequence; a view showing a voice package; a view showing a channel-changing; and a view showing transferring of voice signals. As shown in the figures, the present disclosure is a full-duplex wireless voice broadcasting system with channel-changing and interference-resistance, comprising an emitting device 1 and at least one receiving device 2.

The emitting device 1 comprises a first voice sampling/reconstructing unit 11; a first local network unit 12, connected with the first voice sampling/reconstructing unit 11; and an first operation unit 13 connected with the first local network unit 12, where the emitting device 1 periodically emits data packages containing voice data or non-voice data. Therein, the first voice sampling/reconstructing unit 11 and the first local network unit 12 are mutually connected through a serial peripheral interface (SPI); the first local network unit 12 comprises a first ZigBee module 121; a power amplifier 122 connected with the first ZigBee module 121; and a first radio frequency (RF) antenna 123 connected with the power amplifier 122; the first ZigBee module 121 comprises a first SPI buffer 1211, a transferring buffer 1212, a transferring package voice unit 1213 and a first flash memory 1214; the first SPI buffer 1211, the transferring buffer 1212 and the transferring package voice unit 1213 are used as buffer and package mechanisms for voice data; and, the first operation unit 13 comprises a first indicating light 131, a talk/mute button 132, a first voice indicator 133, a first power supply unit 134, a first microphone connecting port 135 and a first earphone connecting port 136.

The receiving device 2 comprises a second voice sampling/reconstructing unit 21 ; a second local network unit 22 connected with the second voice sampling / reconstructing unit 21; and a second operation unit 23 connected with the second local network unit 22. Therein, the second voice sampling/reconstructing unit 21 and the second local network unit 22 are mutually connected through an SPI; the second local network unit 22 comprises a second ZigBee module 221 ; and a second RF antenna 222 connected with the ZigBee module 221; the second ZigBee module 221 comprises a second SPI buffer 2211, a receiving buffer 2212, a receiving package voice unit 2213 and a second flash memory 2214; the second SPI buffer 2211, the receiving buffer 2212 and the receiving package voice unit 2213 are used as buffer and package mechanisms for voice data; and, the second operation unit 23 comprises a second indicating light 231, a function key 232, a second voice indicator 233, a second power supply unit 234, a second microphone connecting port 235, a second earphone connecting port 236 and a registration key 237. The receiving device 2 uses the second ZigBee module 221 and the second RF antenna 222 of the second local network unit 22 to be coordinated with the first ZigBee module 121 and the first RF antenna 122 of the first network unit 12 of the emitting device 1 for building a connection. After building the connection, the receiving device 2 receives the data packages containing voice or non-voice data, and a standby status is maintained between the emitting device 1 and the receiving device 2.

The emitting device 1 performs a method comprising the following steps:
(a) The emitting device is booted and reset 301.
(b) The emitting device stays in an idle status 302.
(c) It is checked whether an uploaded package is received 303.
(d) If the uploaded package is not received, the following steps are processed:
   (d1) Data in the first flash memory is read 304;
   (d2) A quality feedback code is set 305;
   (d3) Data is packaged 306.
   (d4) A downloaded package is transferred 307 and then go to step (b).
(e) If the uploaded package is received, the uploaded package is unpacked 308.
(f) Through a voice data receiving buffer 309, voice reconstruction is processed 310.
(g) It is checked whether a connection exists 311.
(h) If the connection exists, it is checked whether an alarm parameter exists 312.
(i) If the connection does not exist, a wireless channel parameter is set 313 and then it is checked whether the alarm parameter exists 312.
(j) If the alarm parameter exists, a light and a voice alarm are started 314 and it is checked whether a registration parameter and a check-in parameter exist 315.
(k) If the alarm parameter does not exist, it is checked directly whether the registration parameter and the check-in parameter exist 315.
(l) If the registration parameter and the check-in parameter do not exist, parameters of the emitting device are read 316 and then go to step (d1).
(m) If the registration parameter and the check-in parameter exist, the registration parameter is set 317.
(n) Buffer data is written into the first flash memory 318.
(o) Parameters of the emitting device are read 316 and then go to step (d1).
(p) On voice-sampling, the following steps are processed:
   (p1) A voice sample is directly taken 319.
   (p2) The voice sample is transferred to a data register 320.
   (p3) It is checked whether a transferring buffer is full 321.
   (p4) If the transferring buffer is full, the parameters of the emitting device are read 316 and then go to step (d1).
   (p5) If the transferring buffer is not full, go to step (p1).

The receiving device 2 performs a method comprising the following steps:
(a) The receiving device is booted and reset 401.
(b) It is checked whether a registration is required 402.
(c) If the registration is not required, the following steps are processed:
   (c1) a registration key is pushed 403; and
   (c2) It is checked whether the registration key is pushed more than one second 404.
(d) If the registration key is not pushed more than one second, the registration key is pushed more than one second again.
(e) If the registration key is pushed more than one second, it is checked whether a downloaded package is received 405.
(f) If the downloaded package is received, the following steps are processed:
   (f1) A registration package is transferred 406.
   (f2) It is checked whether the registration is successful 407.
(g) If the registration is not successful, go to step (c1).
(h) If the registration is successful, the following steps are processed:
   (h1) The receiving device stays in an idle status 408.
   (h2) It is checked whether an alarm is required 409.
(i) If the alarm is required, the alarm is started 410 and it is checked whether a transferring buffer is full 411.
(j) If the alarm is not required, it is checked whether the transferring buffer is full 411.
(k) If the transferring buffer is full, the following steps are processed:
   (k1) Parameters of the receiving device are read 412.
   (k2) Data is packaged 413.
   (k3) An uploaded package is transferred 414.
(I) If the transferring buffer is not full, it is checked whether a downloaded package is received 415.
(m) If the downloaded package is not received, go to step (h1).
(n) If the downloaded package is received, it is checked whether a frequency channel needs to be changed 416.
(o) If the frequency channel needs to be changed, the following steps are processed:
   (o1) The frequency channel is changed to a new frequency channel 417.
   (o2) Voice reconstruction is processed 419 through a voice data receiving buffer 418.
   (o3) The receiving device is staying in an idle status 420.
(p) If the frequency channel does not need to be changed, step (o2) and step (o3) are processed.
(q) If the downloaded package is not received in step (e), it is checked whether a channel table needs to be replaced 421.
(r) If the channel table does not need to be replaced, frequency channel is changed 422 and then go to step (e).
(s) If the channel table needs to be replaced, go to step (c1).
(t) If a registration is required in step (b), it is checked whether a downloaded package is received 423.
(u) If the downloaded package is received, package is unpacked 424 and step (o2) and step (o3) are processed.
(v) If the downloaded package is not received, the following steps are processed:
   (v1) A function key is pushed for check-in 425.
   (v2) It is checked whether a button is pushed 426.
(w) If a button is not pushed, a button is pushed again.
(x) If a button is pushed, a check-in package is uploaded 427.
(y) It is checked whether a downloaded package is received 428.
(z) If the downloaded package is received, the package is unpacked 424 and step (o2) and step (o3) are processed.
(aa) If the downloaded package is not received, go to step (c1).
(ab) On voice-sampling, the following steps are processed:
   (ab1) A voice sample is taken 429.
   (ab2) Data of the voice sample are transferred to a data register 430 and step (k2) and step (k3) are processed.

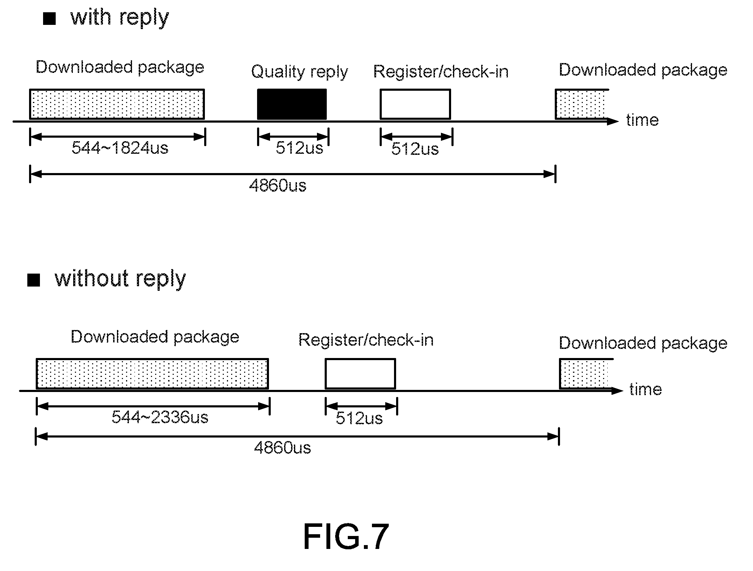

On using the present disclosure, the emitting device 1 and the receiving device 2 are used for processing mechanisms of registering, checking in, controlling and automatic channel-changing:
(A) The receiving device 2 has to be registered at the emitting device 1 to receive data from the emitting device 1. The registration process is as follows:
   1. The registration key 237 of the receiving device 2 is pushed more than one second.
   2. The first indicating light 131 of the emitting device 1 flashes.
   3. The second indicating light 231 of the receiving device 2 flashes.
   4. The function key 232 of the receiving device 2 is pushed for confirmation.
   5. After the registration is successful, the first and second indicating lights 131, 231 of the emitting device 1 and the receiving device 2 are turned off.
   If the above steps are not finished in five seconds, the emitting device 1 and the receiving device 2 will return to the original status with the first and second indicating lights 131, 231 of the emitting device 1 and the receiving device 2 turned off. Once the registration is finished, no more registration is required except for another device.
(B) The receiving device 2 has to check-in after booting for receiving data. The check-in process is as follows:
   1. After being booted, the emitting device 1 calls out each of the registered receiving devices 2 individually. After every booted receiving device 2 replies, the check-in process is finished automatically. Then, each connection between the emitting device 1 and the receiving device 2 is broken and the second indicating light 231 is turned off.
   2. If the receiving device 2 is booted after the emitting device 1 calls out the receiving devices 2 in step (1), the second indicating light 231 is turned on for showing no connection. At the moment, the function key 232 has to be pushed to finish the check-in process so that the second indicating light 231 will be turned off.
(C) For controlling, the following process is done: Every emitting device 1 may have 255 receiving devices 2 at most. For saving repeated registrations, the receiving devices 2 use their original numbers obtained from the previous registrations. After the numbers (say 255 numbers) are all used, if a new registration application is received, a number selected from a list of numbers for the unchecked-in receiving devices 2 is used. If all receiving devices 2 are checked-in, a temporary number will be used for all new registration applications. If a receiving device 2 using the temporary number is rebooted, the receiving device 2 has to register again to get a number. If a registered receiving device 2 finds its number is used by other receiving device 2 on checking-in, the second indicating light 231 is turned on for showing an unregistered status and the registration has to be done again.
(D) Concerning channel-changing (shown in FIG.7), the emitting device 1 demands the checked-in receiving devices 2 to report receiving qualities one by one. If all of the receiving qualities are not good, the emitting device 1 sends a channel-changing notice and then the frequency channel is changed to a next one on a channel table. After the frequency channel is changed, wait for 110 milliseconds (ms). If the receiving device 2 receives the channel-changing notice, the receiving device 2 changes its frequency channel accordingly. When the receiving device 2 does not receive the channel-changing notice continuously for 2 times, the frequency channel of the receiving device 2 is started to be changed between the original frequency channel and the next frequency channel; and, after 110ms, every frequency channel is started to be scanned continuously at a speed of 6.4ms per frequency channel until receiving the channel-changing notice from the emitting device 1. Since time required for scanning 16 channels is 102.4ms, time to wait after changing the frequency channel has to be at least 110ms. The emitting device 1 has a randomly chosen channel table when it is used at he first time. Hence, in theory, there are 16! (=1x2x3x4...x16) kinds of tables; and chance for two same tables obtained by the emitting device 1 is (1/16!)=4.8×10⁻¹⁴. After the channel table of the emitting device 1 is obtained, the channel table is automatically saved in the first flash memory 1214 and will never be changed except by outer force. Whenever a receiving device 2 applies a registration request to the emitting device 1, the emitting device 1 sends the channel table to the receiving device 2 in the reply to the request. Therefore, when any interference happens, frequency channel can be rapidly changed. Besides, the channel table obtained on registration for the receiving device 2 will only change on processing the registration again.

Regarding the time sequence (shown in FIG.7), the emitting device 1 sends a package every 5ms. The package contains 57 bytes with a transferring time (57 bytes) × (8 bits/sec) / 250kbps = 1824us. Hence, after the receiving device 2 receives the package, a good deal of time as 3.176ms is left for handling the package.

Averagely, the emitting device 1 spends 4860 microseconds (µs) for a package. The package can be a 17 bytes downloaded message or a 57 bytes downloaded voice; or, a 33 or 73 bytes package for replying a registration request. After the receiving device 2 which is demanded by the emitting device 1 to reply transferring quality receives the downloaded package from the emitting device 1, the receiving device 2 immediately sends the transferring quality package.

The receiving device 2 only sends the registration or check-in package at the end of a cycle. Because the registration package is longer, the time left is not so leisure for sending the registration (or check-in) package if the time occupied by the transferring-quality package is counted in. Therefore, the registration package does not contain the transferring-quality package. If the downloaded package is a reply package from the emitting device 1 to a registration request, the receiving device 2 for registration or check-in can send packages right after the reply package; or else, the receiving device 2 has to wait about 960µs for sending packages after receiving the reply package.

The packages transferred between the emitting device 1 and the receiving devices 2 are downloaded packages and uploaded packages.

A downloaded package has the following format:

| 6 | 2 | 1 | 2 | 2 | 1 | 1 | 0/1.6 | 0/40 | 2 |
|---|---|---|---|---|---|---|---|---|---|
| PHY Header | FCF | DSN | PANID | Address | Command | RegNo | Channel Seq. | Voice Data | FCS |

Therein:
FCF=0x80;
DSN: sequence number of the package;
PANID: network number;
Address: number of the assigned device;
RegNo: registration number for replying or assigning;
Channel Seq.: channel table; and
Command: command for the downloaded package, having the following format:

| | | | | | | | |
|---|---|---|---|---|---|---|---|
| 1 | Voice | Register | Change channel | (reserve) | (reserve) | (reserve) | (reserve) |

An uploaded package has the following format:

| | | | | | | |
|---|---|---|---|---|---|---|
| 6 | 2 | 1 | 2 | 2 | 1 | 2 |
| PHY Header | FCF | RegNo | PAND | Address | Command | FCS |

Therein:
FCF=0x81;
RegNo: registration number;
Address: sequence number of the device; and
Command: command for the downloaded package, having the following format:

| | | | | | | | |
|---|---|---|---|---|---|---|---|
| 0 | Transferring quality | Registration request | Registration confirmation | Check in | (reserve) | (reserve) | (reserve) |

According to the data package format regulated in IEEE 802.15.4, a voice package includes 6 bytes PHY header, 2 bytes FCF, 1 byte DSN, 2 bytes Destination PANID, 2 bytes Destination Address, n bytes voice data, 2 bytes error check code and 2 bytes reserved system command. Therein, because the source of the package is PAN Coordinator, Source PANID and Source Address are omitted. If the package is a broadcasting package, Destination Address will be filled in with 0xFFFF.

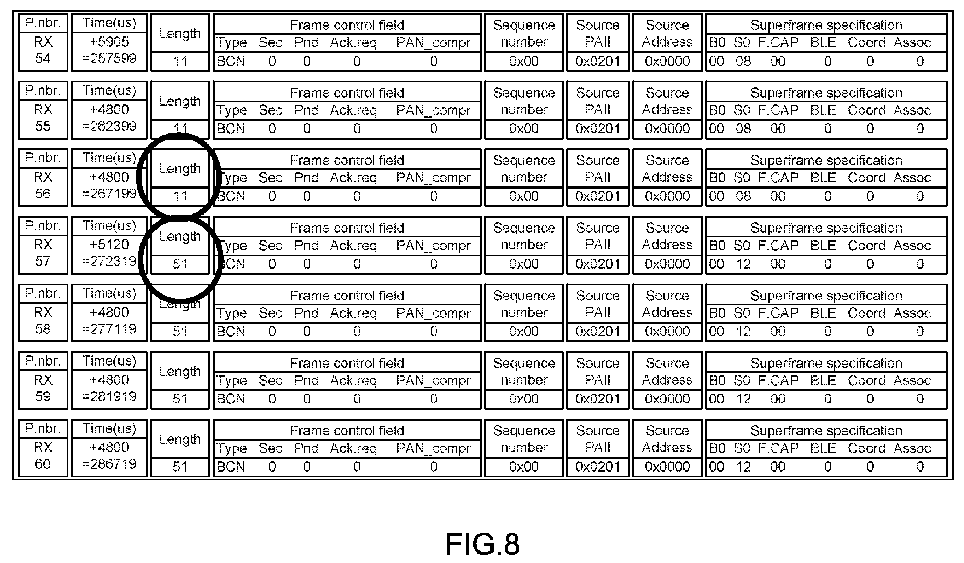

In FIG.8, the packages before and after pushing the talk/mute button 132 of the emitting device 1 are shown. The MSDU package (excluding the 6 bytes PHY header) is increased from 11 bytes to 51 bytes for an amount of 40 bytes.

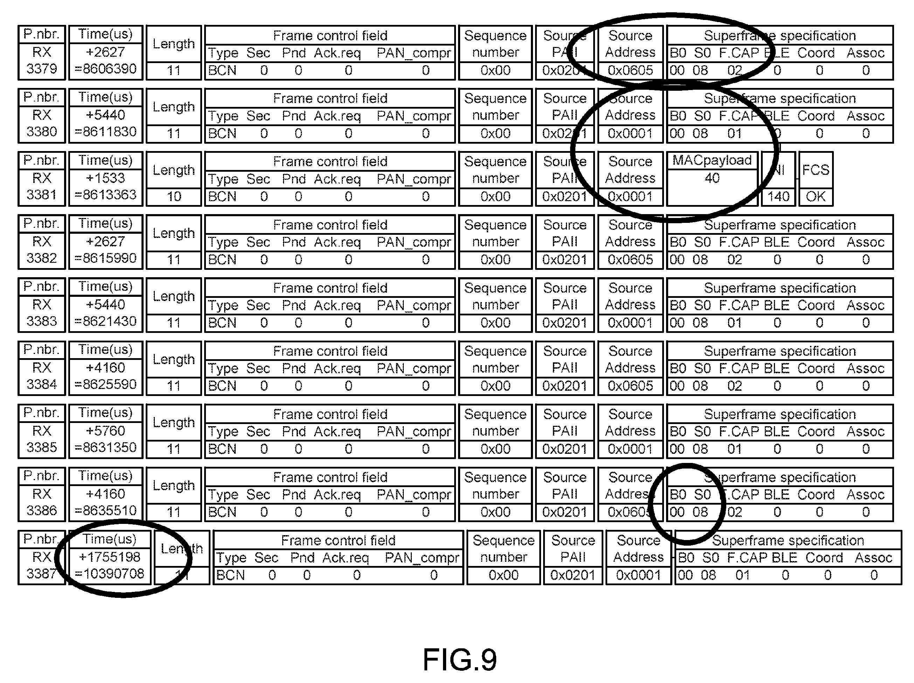

In FIG.9, a channel-changing mechanism is shown. Sniffer monitors a frequency channel each time only. Hence, status for channel-changing is recorded. Two receiving devices 2 at 0x0605 and 0x0001 are on-line. The receiving device 2 at 0x0605 is shut down and then the receiving device 2 at 0x000 is shut down. As shown in the figure, after shutting shown 0x0605, 0x0605 does not sends receiving quality any more. Because 0x0001 still sends receiving quality 0x6C, system does not change frequency channel and Sniffer still sees package. However, when 0x0001 is shut down too, the emitting device 1 no more receives any reply and, later on, the emitting device 1 sends an channel-changing notice (Command = 0x90). Thus, the frequency channel is changed and Sniffer no more sees package until 1755.198ms later. Because the emitting device 1 keeps changing the frequency channel with an interval about 110ms between two frequency channels, the total time of intervals for 15 frequency channels is 1650ms. In addition, after receiving the channel-changing notice, about 5ms of time is spent for waiting. The total time is summed up to about 1725ms, which is quite close to 1755.198ms.

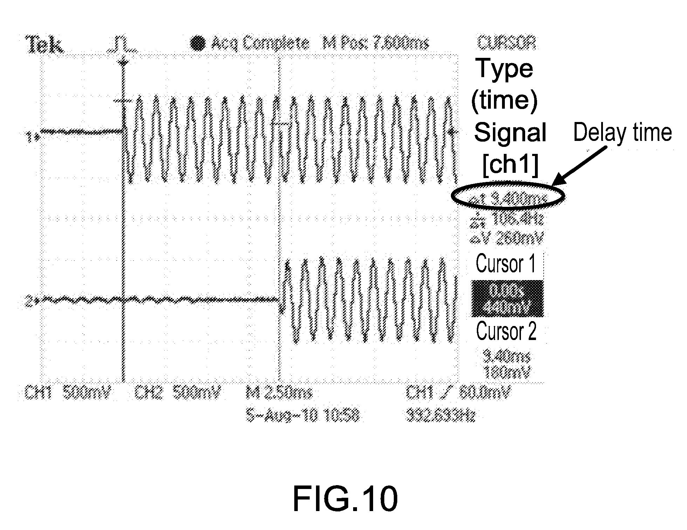

In FIG.10, a wave of 1 kHz and 0.5V is used. Therein, good voice transference is shown with a delay time below 10ms, which is under control as expected.

The present disclosure is a full-duplex wireless voice broadcasting system with channel-changing and interference-resistance. The system can change frequency channel automatically and is interference-resistant to noise occurred on voice broadcasting. The full-duplex voice communication function of the present disclosure makes the emitting device 1 capable of one-way amplifying or broadcasting and makes the receiving device 2 become pager for emergency. Hence, the present disclosure can become a calling system, a teaching system, a touring guide system, an emergency system, etc. to be used in domestic life, in school or even in army.

To sum up, the present disclosure is a full-duplex wireless voice broadcasting system with channel-changing and interference-resistance, where full-duplex (two-way) voice communication is achieved; the present disclosure has at least one receiving device with good mobility to be used as an emergency caller to an emitting device of the present disclosure; and the present disclosure has advantages in interference resistance, energy saving, short-distance emergency calling, and calling for help.

The preferred embodiment herein disclosed is not intended to unnecessarily limit the scope of the disclosure. Therefore, simple modifications or variations belonging to the equivalent of the scope of the claims and the instructions disclosed herein for a patent are all within the scope of the present disclosure.

## Claims

1. A full-duplex wireless voice broadcasting system comprising:
an emitting device (1), said emitting device (1) comprising:
a first voice sampling/reconstructing unit (11);
a first local network unit (12), said first local network unit (12) being connected with said first voice sampling/reconstructing unit (11), said first local network unit (12) comprising
a ZigBee module (121);
a power amplifier (122), said power amplifier (122) being connected with said ZigBee module (121) of the first local network unit (12); and
a radio frequency (RF) antenna (123), said RF antenna (123) of the first local network unit (12) being connected with said power amplifier (122); and
a first operation unit (13) comprising a first indicating light (131), said first operation unit (13) being connected with said first local network unit (12),
wherein said emitting device (1) is configured to periodically emit data packages and said data packages contain data selected from a group consisting of voice data and non-voice data; the system further comprising at least one receiving device (2), said receiving device (2) comprising:
a second voice sampling/reconstructing unit (21);
a second local network unit (22), said second local network unit (22) being connected with said second voice sampling/reconstructing unit (21), said second local network unit (22) comprising
a ZigBee module (221); and
a RF antenna (222), said RF antenna (222) of the second local network unit (22) being connected with said ZigBee module (221) of the second local network unit (22); and
a second operation unit (23) comprising a registration key (237) for initiating a registration process, a second indicating light (231) and a function key (232) for confirming the registration process and for finishing a manual check-in process, which is performed if the receiving device is booted after the emitting device is booted, said second operation unit (23) being connected with said second local network unit (22),
wherein the first indicating light (131) and the second indicating light (231) are configured to flash during the registration process,
wherein the second indicating light (231) is configured to turn on when the function key (237) has to be pressed in order to finish the manual check-in process, wherein, after being connected with said emitting device (1), said receiving device (2) receives said data packages; and a standby status is maintained between said emitting device (1) and said receiving device (2), and
wherein the emitting device is configured to demand the checked-in receiving device to report receiving qualities, to send a channel changing notice to the receiving device, if the receiving qualities are not good because of interference, and to change the frequency channel according to a channel table and the receiving device is configured to change the frequency channel after receipt of the channel changing notice.

2. The system according to claim 1, wherein said first voice sampling/reconstructing unit (11) and said first local network unit (12) are mutually connected through a serial peripheral interface (SPI).

3. The system according to claim 1, wherein said ZigBee module (121) of the first local network unit (12) comprises
a SPI buffer (1211);
a transferring buffer (1212);
a transferring package voice unit (1213); and
a flash memory (1214).

4. The system according to claim 1, wherein said first operation unit (13) comprises
a talk/mute button (132);
a first and second voice indicator (133);
a power supply unit (134);
a microphone connecting port (135); and
a earphone connecting port (136).

5. The system according to claim 1, wherein said second voice sampling/reconstructing unit (21) and said second local network unit (22) are mutually connected through an SPI.

6. The system according to claim 1, wherein said ZigBee module (221) of the second local network (22) comprises
a SPI buffer (2211);
a receiving buffer (2212);
a receiving package voice unit (2213); and
a flash memory (2214).

7. The system according to claim 1, wherein said second operation unit (23) comprises
a voice indicator (233);
a power supply unit (234);
a microphone connecting port (235); and
a earphone connecting port (236).

8. A method for full-duplex wireless voice broadcasting according to which an emitting device (1) of a full-duplex wireless voice broadcasting system according to claim 1 performs the steps of:
(a) booting and resetting said emitting device (301);
(b) staying in an idle status (302);
(c) checking whether an uploaded package is received (303);
(d) if said uploaded package is not received, processing steps of:
(d1) reading data in said flash memory of the first local
network unit (12) (304);
(d2) setting a quality feedback code (305);
(d3) packaging data (306); and
(d4) transferring a downloaded package (307) and
then going to step (b);
(e) if said uploaded package is received, unpacking said uploaded package (308);
(f) through a voice data receiving buffer (309), processing voice reconstruction (310);
(g) checking whether a connection exists (311);
(h) if said connection exists, checking whether an alarm parameter exists (312);
(i) if said connection does not exist, setting a wireless channel parameter (313) and then checking whether said alarm parameter exists (312);
(j) if said alarm parameter exists, starting a light and a voice alarm (314) and checking whether a registration parameter and a check-in parameter exist (315);
(k) if said alarm parameter does not exist, directly checking whether said registration parameter and said check-in parameter exist (315);
(l) if said registration parameter and said check-in parameter do not exist, reading parameters of said emitting device (316) and then going to step (d1);
(m) if said registration parameter and said check-in parameter exist, setting said registration parameter (317);
(n) writing buffer data into said flash memory of the first local network unit (12) (318);
(o) reading parameters of said emitting device (316) and then going to step (d1); and
(p) on voice-sampling, processing steps of:
(p1) directly taking a voice sample (319);
(p2) transferring said voice sample to a data register (320);
(p3) checking whether a transferring buffer is full (321);
(p4) if said transferring buffer is full, reading said
parameters of said emitting device (316) and then
going to step (d1); and
(p5) if said transferring buffer is not full, going to step
(p1).

9. A method for full-duplex wireless voice broadcasting according to which a receiving device (1) of a full-duplex wireless voice broadcasting system according to claim 1 performs the steps of:
(a) booting and resetting said receiving device (401);
(b) checking whether a registration is required (402);
(c) if said registration is not required, processing steps of:
(c1) pushing a registration key (403); and
(c2) checking whether said registration key is pushed more than one second (404);
(d) if said registration key is not pushed more than one second, pushing said registration key more than one second again;
(e) if said registration key is pushed more than one second, checking whether a downloaded package is received (405);
(f) if said downloaded package is received, processing steps of:
(f1) transferring a registration package (406); and
(f2) checking whether said registration is successful (407);
(g) if said registration is not successful, going to step (c1);
(h) if said registration is successful, processing steps of:
(h1) staying in an idle status (408); and
(h2) checking whether an alarm is required (409);
(i) if said alarm is required, starting said alarm (410) and checking whether a transferring buffer is full (411);
(j) if said alarm is not required, directly checking whether said transferring buffer is full (411);
(k) if said transferring buffer is full, processing steps of:
(k1) reading parameters of said receiving device (412);
(k2) packaging data (413); and
(k3) transferring an uploaded package (414);
(l) if said transferring buffer is not full, checking whether a downloaded package is received (415);
(m) if said downloaded package is not received, going to step (h1);
(n) if said downloaded package is received, checking whether a frequency channel needs to be changed (416);
(o) if said frequency channel needs to be changed, processing steps of:
(o1) changing said frequency channel to a new
frequency channel (417);
(o2) processing voice reconstruction (419) through a
voice data receiving buffer (418); and
(o3) staying in an idle status (420);
(p) if said frequency channel does not need to be changed, processing step (o2) and step (o3);
(q) if said downloaded package is not received in step (e), checking whether a channel table needs to be replaced (421);
(r) if said channel table does not need to be replaced, changing frequency channel (422) and then going to step (e);
(s) if said channel table needs to be replaced, going to step (c1);
(t) if a registration is required in step (b), checking whether a downloaded package is received (423);
(u) if said downloaded package is received, unpacking package (424) and processing step (o2) and step (o3);
(v) if said downloaded package is not received, processing steps of:
(v1) pushing a function key for check-in (425); and
(v2) checking whether a button is pushed (426);
(w) if a button is not pushed, pushing a button again;
(x) if a button is pushed, uploading a check-in package (427);
(y) checking whether a downloaded package is received (428);
(z) if said downloaded package is received, unpacking package (424) and processing step (o2) and step (o3);
(aa) if said downloaded package is not received, going to step (c1); and
(ab) on voice-sampling, processing steps of:
(ab1) taking voice sample (429); and
(ab2) transferring data of said voice sample to a data register (430) and processing step (k2) and step (k3).

## Patentansprüche

1. Drahtloses Vollduplex-Sprachübertragungssystem umfassend:
eine Sendevorrichtung (1), wobei die Sendevorrichtung (1) umfasst:
eine erste Sprach-Auswahl/Rekonstruktions-Einheit (11),
eine erste Lokalnetzeinheit (12), wobei die erste Lokalnetzeinheit (12) mit der ersten Sprach-Auswahl/Rekonstruktions-Einheit (11) verbunden ist, und wobei die erste Lokalnetzeinheit (12) umfasst:
ein ZigBee-Modul (121),
einen Leistungsverstärker (122), wobei der Leistungsverstärker (122) mit dem ZigBee-Modul (121) der ersten Lokalnetzeinheit (12) verbunden ist, und
eine Hochfrequenz-(RF)-Antenne (123), wobei die RF-Antenne (123) der ersten Lokalnetzeinheit (12) mit dem Leistungsverstärker (122) verbunden ist, und
eine erste Betriebseinheit (13), die eine erste Anzeigeleuchte (131) umfasst,
wobei die erste Betriebseinheit (13) mit der ersten Lokalnetzeinheit (12) verbunden ist,
wobei die Sendevorrichtung (1) konfiguriert ist, periodisch Datenpakete auszusenden, wobei die Datenpakete Daten umfassen, die aus einer Gruppe bestehend aus Sprachdaten und Nicht - Sprachdaten ausgewählt sind, und wobei das System ferner umfasst:
mindestens eine Empfangsvorrichtung (2), wobei die Empfangsvorrichtung (2) umfasst:
eine zweite Sprach-Auswahl/Rekonstruktions-Einheit (21),
eine zweite Lokalnetzeinheit (22), wobei die zweite Lokalnetzeinheit (22) mit der zweiten Sprach-Auswahl/Rekonstruktions-Einheit (21) verbunden ist, und
wobei die zweite Lokalnetzeinheit (22) umfasst:
ein ZigBee-Modul (212) und
eine RF-Antenne (222), wobei die RF-Antenne (222) der zweiten Lokalnetzeinheit (22) mit dem ZigBee-Modul (212) der zweiten Lokalnetzeinheit (22) verbunden ist, und
eine zweite Betriebseinheit (23), die eine Registrierungstaste (237) für die Initiierung eines Registrierungsprozesses, eine zweite Anzeigeleuchte (231) und eine Funktionstaste (232) zur Bestätigung des Registrierungsprozesses und für das Beenden eines manuellen Check - in - Prozesses umfasst, welcher durchgeführt wird, falls die Empfangsvorrichtung hochgefahren wird, nachdem die Sendevorrichtung hochgefahren ist, wobei die zweite Betriebseinheit (23) mit der zweiten Lokalnetzeinheit (22) verbunden ist,
wobei die erste Anzeigeleuchte (131) und die zweite Anzeigeleuchte (231) konfiguriert sind, während des Registrierungsprozesses aufzuleuchten,
wobei die zweite Anzeigeleuchte (231) konfiguriert ist, anzugehen, wenn die Funktionstaste (237) betätigt werden muss, um den manuellen Check - in - Prozess abzuschließen,
wobei die Empfangsvorrichtung (2) die Datenpakete empfängt, nachdem diese mit der Sendevorrichtung (1) verbunden ist, und wobei ein Standby - Status zwischen der Sendevorrichtung (1) und der Empfangsvorrichtung (2) beibehalten wird, und
wobei die Sendevorrichtung konfiguriert ist, von der eingecheckten Empfangsvorrichtung einen Bericht bezüglich der Empfangsqualitäten einzufordern, um eine Kanalwechselnachricht an die Empfangsvorrichtung zu senden, falls die Empfangsqualitäten aufgrund von Interferenzen nicht ausreichend sind, und
um den Frequenzkanal gemäß einer Kanaltabelle zu wechseln, und wobei die Empfangsvorrichtung konfiguriert ist, den Frequenzkanal nach dem Empfang der Kanalwechselnachricht zu wechseln.

2. System nach Anspruch 1, wobei die erste Sprach - Auswahl/Rekonstruktions-Einheit (11) und die erste Lokalnetzeinheit (12) über eine serielle periphere Schnittstelle (SPI) miteinander verbunden sind.

3. System nach Anspruch 1, wobei das ZigBee-Modul (121) der ersten Lokalnetzeinheit (12) umfasst:
einen SPI-Puffer (1211),
einen Transferpuffer (1212),
eine Transferpaketspracheinheit (1213) und
einen Flashspeicher (1214).

4. System nach Anspruch 1, wobei die erste Betriebseinheit (13) umfasst:
einen Sprech-/Stummknopf (132),
einen ersten und zweiten Sprachindikator (133),
eine Energieversorgungseinheit (134),
einen Mikrofonverbindungsanschluss (135) und
einen Kopfhörerverbindungsanschluss (136).

5. System nach Anspruch 1, wobei die zweite Sprach -Auswahl / Rekonstruktions - Einheit (21) und die zweite Lokalnetzeinheit (22) über ein SPI miteinander verbunden sind.

6. System nach Anspruch 1, wobei das ZigBee-Modul (221) der zweiten Lokalnetzeinheit (22) umfasst:
einen SPI-Puffer (2211),
einen Empfangspuffer (2212),
eine Empfangspaketspracheinheit (2213) und
einen Flashspeicher (2214).

7. System nach Anspruch 1, wobei die Betriebseinheit (23) umfasst:
einen Sprachindikator (233),
eine Energieversorgungseinheit (234),
einen Mikrofonverbindungsanschluss (235) und
einen Kopfhörerverbindungsanschluss (236).

8. Verfahren für eine drahtlose Vollduplex - Sprachübertragung gemäß welcher eine Sendevorrichtung (1) gemäß eines drahtlosen Vollduplex - Sprachübertragungssystems nach Anspruch 1 die Verfahrensschritte ausführt:
(a) Hochfahren und Zurücksetzen der Sendevorrichtung (301),
(b) Verbleiben in einem Wartezustand (302),
(c) Überprüfen, ob ein hochgeladenes Paket empfangen wurde (303),
(d) Ausführen folgender Verfahrensschritte, falls das hochgeladene Paket nicht empfangen wurde,
(d1) Auslesen von Daten in dem Flashspeicher der ersten lokalen Netzeinheit (12) (304),
(d2) Setzen eines Qualitätsfeedbackcodes (305),
(d3) Verpacken von Daten (306) und
(d4) Übertragen eines heruntergeladenen Pakets (307) und darauffolgend Übergehen zu Verfahrensschritt (b),
(e) Entpacken des hochgeladenen Pakets (308), falls das hochgeladene Paket empfangen wurde,
(f) Bearbeiten einer Sprachrekonstruktion (310) mittels eines Sprachdatenempfangspuffers (309),
(g) Überprüfen, ob eine Verbindung besteht (311),
(h) Überprüfen, ob ein Alarmparameter existiert, falls die Verbindung besteht (312),
(i) Setzen eines Drahtlos - Kanal - Parameters (313) und darauffolgendes Überprüfen, ob der Alarmparameter existiert (312), falls die Verbindung nicht existiert,
(j) Starten eines Licht- und eines Akustikalarms (314) und Überprüfen, ob ein Registrierungsparameter und ein Check - in - Parameter existieren (315), falls der Alarmparameter existiert,
(k) direktes Überprüfen, ob der Registrierungsparameter und der Check - in - Parameter existieren (315), falls der Alarmparameter nicht existiert,
(l) Auslesen von Parametern der Sendevorrichtung (316) und darauffolgend Zurückgehen zu Schritt (d1), falls der Registrierungsparameter und der Check - in - Parameter nicht existieren,
(m) Setzen des Registrierungsparameters (317), falls der Registrierungsparameter und der Check - in - Parameter existieren,
(n) Schreiben von Pufferdaten in den Flashspeicher der ersten Lokalnetzeinheit (12) (318),
(o) Auslesen von Parametern der Sendevorrichtung (316) und darauffolgend Übergehen zu Verfahrensschritt (d1) und
(p) bezüglich der Sprachauswahl Durchführen der Verfahrensschritte:
(p1) direktes Aufnehmen einer Sprachauswahl (319),
(p2) Übertragen der Sprachauswahl an ein Datenregister (320),
(p3) Überprüfen, ob ein Übertragungspuffer voll ist (321),
(p4) Auslesen der Parameter der Sendevorrichtung (316) und darauffolgend Übergehen zu Schritt (d1), falls der Übertragungspuffer voll ist, und
(p5) Übergehen zu Schritt (p1), falls der Übertragungspuffer nicht voll ist.

9. Verfahren für eine drahtlose Vollduplex - Sprachübertragung gemäß welchem eine Empfangsvorrichtung (1) eines drahtlosen Vollduplex - Sprachübertragungssystems gemäß Anspruch 1 die Verfahrensschritte durchführt:
(a) Hochfahren und Zurücksetzen der Empfangsvorrichtung (401),
(b) Überprüfen, ob eine Registrierung benötigt wird (402),
(c) Durchführen der folgenden Verfahrensschritte, falls die Registrierung nicht notwendig ist:
(c1) Betätigen einer Registrierungstaste (403) und
(c2) Überprüfen, ob die Registrierungstaste länger als eine Sekunde betätigt wurde (404),
(d) erneutes Betätigen der Registrierungstaste für länger als eine Sekunde, falls die Registrierungstaste nicht länger als eine Sekunde betätigt worden ist,
(e) Überprüfen, ob ein heruntergeladenes Paket empfangen wurde (405), falls die Registrierungstaste länger als eine Sekunde betätigt wurde,
(f) Durchführen folgender Verfahrensschritte, falls das heruntergeladene Paket empfangen wurde:
(f1) Übertragen eines Registrierungspakets (406) und
(f2) Überprüfen, ob die Registrierung erfolgreich ist (407), (g) Übergehen zu Verfahrensschritt (c1), falls die Registrierung nicht erfolgreich ist,
(h) Durchführen folgender Verfahrensschritte, falls die Registrierung erfolgreich ist:
(h1) Verbleiben in einem Wartezustand (408),
(h2) Überprüfen, ob ein Alarm notwendig ist (409),
(i) Starten des Alarms (410) und Überprüfen, ob ein Übertragungspuffer voll ist (411), falls der Alarm benötigt wird,
(j) direktes Überprüfen, ob der Übertragungspuffer voll ist (411), falls der Alarm nicht benötigt wird,
(k) Durchführen der folgenden Verfahrensschritte, falls der Übertragungspuffer voll ist:
(k1) Auslesen von Parametern der Empfangsvorrichtung (412),
(k2) Verpacken von Daten (413),
(k3) Übertragen eines hochgeladenen Pakets (414),
(l) Überprüfen, ob ein heruntergeladenes Paket empfangen wurde (415), falls der Übertragungspuffer nicht voll ist,
(m) Übergehen zu Verfahrensschritt (h1), falls das heruntergeladene Paket nicht empfangen wurde,
(n) Überprüfen, ob ein Frequenzkanal gewechselt werden muss (416), falls das heruntergeladenes Paket empfangen wurde,
(o) Durchführen der folgenden Verfahrensschritte, falls der Frequenzkanal gewechselt werden muss:
(o1) Wechseln des Frequenzkanals zu einem neuen Frequenzkanal (417),
(o2) Durchführen einer Sprachrekonstruktion (419) mittels eines Sprachdatenempfangspuffers (418) und
(o3) Verbleiben in einem Wartezustand (420),
(p) Durchführen des Verfahrensschritts (o2) und des Verfahrensschritts (o3), falls der Frequenzkanal nicht gewechselt werden muss,
(q) Überprüfen, ob eine Kanaltabelle ersetzt werden muss (421), falls das heruntergeladene Paket im Verfahrensschritt (e) nicht empfangen wurde,
(r) Wechseln des Frequenzkanals (422) und darauffolgend Übergehen zu Verfahrensschritt (e), falls die Kanaltabelle nicht ersetzt werden muss,
(s) Übergehen zu Verfahrensschritt (c1), falls die Kanaltabelle ersetzt werden muss,
(t) Überprüfen, ob ein heruntergeladenes Paket empfangen wurde (423), falls im Verfahrensschritt (b) eine Registrierung notwendig ist,
(u) Entpacken des Pakets (424) und Durchführen des Verfahrensschritts (o2) und des Verfahrensschritt (o3), falls das heruntergeladene Paket empfangen wurde,
(v) Durchführen folgender Verfahrensschritte, falls das heruntergeladene Paket nicht empfangen wurde:
(v1) Betätigen einer Funktionstaste für den Check - in (425) und
(v2) Überprüfen, ob ein Knopf betätigt wurde (426),
(w) erneutes Betätigen eines Knopfes, falls ein Knopf nicht betätigt wurde,
(x) Hochladen eines Check - in - Pakets (427), falls ein Knopf betätigt wurde,
(y) Überprüfen, ob ein heruntergeladenes Paket empfangen wurde (428),
(z) Entpacken des Pakets (424) und Durchführen des Verfahrensschritts (o2) und des Verfahrensschritts (o3), falls das heruntergeladene Paket empfangen wurde,
(aa) Übergehen zu Verfahrensschritt (c1), falls das heruntergeladene Paket nicht empfangen wurde, und
(ab) bezüglich der Sprachauswahl Durchführen der folgenden Verfahrensschritte:
(ab1) Aufnehmen einer Sprachauswahl (429) und
(ab2) Übertragen von Daten der Sprachauswahl an ein Datenregister (430) und Durchführen des Verfahrensschritts (k2) und des Verfahrensschritts (k3).

## Revendications

1. Système de diffusion vocale sans fil en duplex intégral comprenant :
un dispositif d'émission (1), ledit dispositif d'émission (1) comprenant :
une première unité d'échantillonnage/de reconstruction vocale (11) ;
une première unité de réseau local (12), ladite première unité de réseau local (12) étant reliée à ladite première unité d'échantillonnage/de reconstruction vocale (11), ladite première unité de réseau local (12) comprenant :
un module ZigBee (121) ;
un amplificateur de puissance (122), ledit amplificateur de puissance (122) étant relié audit module ZigBee (121) de la première unité de réseau local (12) et
une antenne (123) de radiofréquence (RF), ladite antenne de radiofréquence (123) de la première unité de réseau local (12) étant reliée audit amplificateur de puissance (122) et
une première unité de fonctionnement (13) comprenant un premier voyant lumineux (131), ladite première unité de fonctionnement (13) étant reliée à ladite première unité de réseau local (12),
ledit dispositif d'émission (1) étant configuré pour émettre périodiquement des paquets de données et lesdits paquets de données contenant des données sélectionnées dans un groupe comprenant des données vocales et des données non vocales, le système comprenant de plus :
au moins un dispositif de réception (2), ledit dispositif de réception (2) comprenant :
une seconde unité d'échantillonnage/de reconstruction vocale (21) ;
une seconde unité de réseau local (22), ladite seconde unité de réseau local (22) étant reliée à ladite seconde unité d'échantillonnage/de reconstruction vocale (21), ladite seconde unité de réseau local (22) comprenant :
un module ZigBee (221) et
une antenne RF (222), ladite antenne RF (222) de la seconde unité de réseau local (22) étant reliée audit module ZigBee (221) de la seconde unité de réseau local (22) et
une seconde unité de fonctionnement (23) comprenant une touche d'enregistrement (237) pour initier un processus d'enregistrement, un second voyant (231) et une touche de fonction (232) pour confirmer le processus d'enregistrement et pour terminer un processus de contrôle manuel qui est réalisé si le dispositif de réception est démarré après que le dispositif d'émission soit démarré, ladite seconde unité de fonctionnement (23) étant reliée à ladite seconde unité de réseau local (22), le premier voyant (131) et le second voyant (231) étant configurés pour clignoter pendant le processus d'enregistrement, le second voyant (231) étant configuré pour se mettre en marche lorsque la touche de fonction (237) doit être appuyée pour terminer le processus de contrôle manuel, cependant que, après avoir été relié audit dispositif d'émission (1), ledit dispositif de réception (2) reçoit lesdits paquets de données et un état de veille est maintenu entre ledit dispositif d'émission (1) et ledit dispositif de réception (2) et le dispositif d'émission étant configuré pour demander au dispositif de réception qui a été contrôlé de signaler des qualités de réception, d'émettre un avis de changement de canal au dispositif de réception si les qualités de réception ne sont pas bonnes à cause d'interférence et de changer le canal de fréquence selon un tableau des canaux et le dispositif de réception étant configuré pour changer le canal de fréquence après réception de l'avis de changement de canal.

2. Système selon la revendication 1, ladite première unité d'échantillonnage/de reconstruction vocale (11) et ladite première unité de réseau local (12) étant mutuellement reliées par une interface périphérique sérielle (SPI).

3. Système selon la revendication 1, ledit module ZigBee (121) de la première unité de réseau local (12) comprenant :
un tampon de SPI (1211),
un tampon de transfert (1212),
une unité vocale de paquet de transfert (1213) et
une mémoire flash (1214).

4. Système selon la revendication 1, ladite première unité de fonctionnement (13) comprenant un bouton parler/muet (132),
un premier et un second indicateur vocal (133),
une unité d'alimentation en puissance (134),
un port de connexion de microphone (135) et
un port de connexion d'écouteur (136).

5. Système selon la revendication 1, ladite seconde unité d'échantillonnage/de reconstruction vocale (21) et ladite seconde unité de réseau local (22) étant reliées mutuellement par une SPI.

6. Système selon la revendication 1, ledit module ZigBee (221) de ladite seconde unité de réseau local (22) comprenant :
un tampon de SPI (2211),
un tampon de réception (2212),
une unité vocale de réception de paquet (2213) et
une mémoire flash (2214).

7. Système selon la revendication 1, ladite seconde unité de fonctionnement (23) comprenant :
un indicateur vocal (233),
une unité d'alimentation en puissance (234),
un port de connexion de microphone (235) et
un port de connexion d'écouteur (236).

8. Procédé de diffusion vocale sans fil en duplex intégral selon lequel un dispositif d'émission (1) d'un système de diffusion vocale sans fil en duplex intégral selon la revendication 1 réalise les étapes de :
(a) démarrage et remise à l'état initial dudit dispositif d'émission (301) ;
(b) rester dans un état inactif (302) ;
(c) contrôler si un paquet non chargé a été reçu (303) ;
(d) si ledit paquet non chargé n'a pas été reçu, réalisation des étapes de :
(d1) lecture de données dans ladite mémoire flash de ladite première unité de réseau local (12) (304) ;
(d2) réglage d'un code de retour qualité (305) ;
(d3) paquetage de données (306) et
(d4) transfert d'un paquet téléchargé (307) et ensuite passage à l'étape (b) ;
(e) si ledit paquet téléchargé est reçu, dépaquetage dudit paquet téléchargé (308) ;
(f) traitement de reconstruction vocale (310) à travers un tampon de réception de données vocales (309) ;
(g) vérification de l'existence d'une connexion (311) ;
(h) si ladite connexion existe, vérification de l'existence d'un paramètre d'alarme (312) ;
(i) si ladite connexion n'existe pas, réglage d'un paramètre de canal sans fil (313) et ensuite vérification de l'existence dudit paramètre d'alarme (312) ;
(j) si ledit paramètre d'alarme existe, mise en marche d'un voyant et d'une alarme vocale (314) et vérification de l'existence d'un paramètre d'enregistrement et d'un paramètre de contrôle (315) ;
(k) si ledit paramètre d'alarme n'existe pas, vérification directement de l'existence dudit paramètre d'enregistrement et dudit paramètre de contrôle (315) ;
(l) si ledit paramètre d'enregistrement et ledit paramètre de contrôle n'existent pas, lecture des paramètres dudit dispositif d'émission (316) et ensuite passage à l'étape (d1) ;
(m) si ledit paramètre d'enregistrement et ledit paramètre de contrôle existent, réglage dudit paramètre d'enregistrement (317) ;
(n) écriture de données tampon dans ladite mémoire flash de la première unité de réseau local (12) (318) ;
(o) lecture des paramètres dudit dispositif d'émission (316) et ensuite passage à l'étape (d1) et
(p) sur échantillonnage vocal, réalisation des étapes de :
(p1) prise directe d'un échantillon vocal (319)
(p2) transfert dudit échantillon vocal à un registre de données (320) ;
(p3) vérification de si un tampon de transfert est plein (321) ;
(p4) si ledit tampon de transfert est plein, lecture desdits paramètres dudit dispositif d'émission (316) et ensuite passage à l'étape (d1) et
(p5) si ledit tampon de transfert n'est pas plein, passage à l'étape (p1).

9. Procédé de diffusion vocale sans fil en duplex intégral selon lequel un dispositif de réception (1) d'un système de diffusion vocale sans fil en duplex intégral selon la revendication 1 réalise les étapes de :
(a) démarrage et remise à l'état initial dudit dispositif de réception (401) ;
(b) vérification de la nécessité d'un enregistrement (402) ;
(c) si ledit enregistrement n'est pas nécessaire, réalisation des étapes de :
(c1) pousser une touche d'enregistrement (403) et
(c2) vérification si ladite touche d'enregistrement est poussée plus d'une seconde (404) ;
(d) si ladite touche d'enregistrement n'est pas poussée plus d'une seconde, pousser ladite touche d'enregistrement à nouveau plus d'une seconde ;
(e) si ladite touche d'enregistrement est poussée plus d'une seconde, vérification de la réception d'un paquet téléchargé (405) ;
(f) si ledit paquet téléchargé est reçu, réalisation des étapes de :
(f1) transfert d'un paquet d'enregistrement (406) et
(f2) vérification du succès dudit enregistrement (407) ;
(g) si ledit enregistrement n'a pas réussi, passage à l'étape (c1) ;
(h) si ledit enregistrement a réussi, réalisation des étapes de :
(h1) rester dans un état inactif (408) et
(h2) vérification de la nécessité d'une alarme (409) ;
(i) si ladite alarme est nécessaire, démarrage de ladite alarme (410) et vérification de si un tampon de transfert est plein (411);
(j) si ladite alarme n'est pas nécessaire, vérification directe de si ledit tampon de transfert est plein (411) ;
(k) si ledit tampon de transfert est plein, réalisation des étapes de :
(k1) lecture des paramètres dudit dispositif de réception (412) ;
(k2) paquetage de données (413) et
(k3) transfert d'un paquet non téléchargé (414) ;
(l) si ledit tampon de transfert n'est pas plein, vérification de la réception d'un paquet téléchargé (415) ;
(m) si ledit paquet téléchargé n'est pas reçu, passage à l'étape (h1) ;
(n) si ledit paquet téléchargé est reçu, vérification de si un canal de fréquence a besoin d'être changé (416) ;
(o) si ledit canal de fréquence a besoin d'être changé, réalisation des étapes de :
(o1) changement dudit canal de fréquence à un nouveau canal de fréquence (417) ;
(o2) traitement de reconstruction vocale (419) par un tampon de réception de données vocales (418) et
(o3) rester dans un état inactif (420) ;
(p) si ledit canal de fréquence n'a pas besoin d'être changé, réalisation de l'étape (o2) et de l'étape (o3) ;
(q) si ledit paquet téléchargé n'est pas reçu à l'étape (e), vérification de si un tableau de canaux a besoin d'être remplacé (421) ;
(r) si ledit tableau de canaux n'a pas besoin d'être remplacé, changement du canal de fréquence (422) et ensuite passage à l'étape (e) ;
(s) si ledit tableau de canaux a besoin d'être remplacé, passage à l'étape (c1) ;
(t) si un enregistrement est requis à l'étape (b), vérification de la réception d'un paquet téléchargé (423) ;
(u) si ledit paquet téléchargé est reçu, dépaquetage du paquet (424) et réalisation de l'étape (o2) et de l'étape (o3) ;
(v) si ledit paquet téléchargé n'est pas reçu, réalisation des étapes de :
(v1) pousser une touche de fonction pour le contrôle (425) et
(v2) vérification de si une touche a été poussée (426) ;
(w) si une touche n'est pas poussée, pousser à nouveau une touche ;
(x) si une touche est poussée, téléchargement d'un paquet de contrôle (427) ;
(y) vérification de si un paquet téléchargé est reçu (428) ;
(z) si ledit paquet téléchargé est reçu, dépaquetage du paquet (424) et réalisation de l'étape (o2) et de l'étape (o3) ;
(aa) si ledit paquet téléchargé n'est pas reçu, passage à l'étape (c1) et
(ab) sur échantillonnage vocal, réalisation des étapes de :
(ab1) prise d'un échantillonnage vocal (429) et
(ab2) transfert de données dudit échantillon vocal à un registre de données (430) et réalisation de l'étape (k2) et de l'étape (k3).
